# EUROPEAN PATENT APPLICATION

(11) **EP 2 353 468 A1**
(43) Date of publication of application: **10.08.2011**
(21) Application number: 09817254.7
(22) Date of filing: 24.09.2009
(51) Int. Cl.: A47J 31/00, A47G 19/14, A23F 5/26, A23F 3/18, B01D 11/02, C02F 1/26

(54) **PORTABLE MULTIFUNCTIONAL COFFEE EXTRACTING DEVICE AND ITS APPLICATION**

(30) Priority: 27.09.2008 CN 200810200659; 09.10.2008 CN 200810169335; 12.01.2009 CN 200910045194
(71) Applicant: Chen, Yiru, Shanghai 200438 (CN)
(72) Inventor: Chen, Yiru, Shanghai 200438 (CN)
(74) Representative: Viering, Jentschura & Partner
(86) International application number: PCT/CN2009/074194
(87) International publication number: WO 2010/037340

(57) **Abstract**

A portable multifunctional coffee extracting device and its application are provided. The extracting device includes an outer container (1) and an inner container (2). The inner container (2) is set in the outer container (1). The outer container (1) is movably sleeved with the inner container (2). The outer container (1) has a closed bottom surface (3). There is an extract holding chamber (4) at the bottom of the inner container (2). A retaining piece (7) or porous baffle plate is set in the bottom surface of the extract holding chamber (4). A filter screen cover (5) is set in the bottom surface of the inner container (2). There is a mechanical sealing device (8) between the side wall of the outer container (1) and the side wall of the inner container (2). The extracting device can be used for extracting or filtering multiple kinds of beverage such as coffee, tea and drinking water.

## Description

### Technology Field

This invention is related to a beverage making device and its application, particularly related to a portable multi-functional coffee extraction device. It can be applied to the extraction or filtering of coffee, tea and other beverages.

### Background

It is commonly recognized globally that the best Espresso extraction condition is of 8-9 Par pressure, at around 93°C water temperature and between 20-25 seconds extraction duration. However, the currently existing (non-electrical) coffee pots and extraction devices cannot fully meet the requirement of the best Espresso extraction condition recognized globally. Neither can the current devices realize a selection among three extraction conditions, nor can they provide various other functions.

Moka pot, also known as Napoli pot, was initially mass-produced and marketed in 1903 by a company named Bialetti in Italy. Moka pot consists of an upper pot, a filter and a lower pot. Water is filled in the lower pot. Coffee powder is put above the filter. After the lower pot is heated up, steam vapor is generated and is pressurized to push the hot water up, which passes through the coffee powder and the connection tube, and condenses to form coffee liquid in the upper pot. Due to the formation of steam pressure, this extraction is categorized as pressurized brewing method, also called as Manual Espresso. Moka pot uses airtight lower pot and boiling water to create the pressure. It has the following limitations:

1) The extraction is at excessively high extraction temperature (the boiling point of water in such condition is above 100°C), which is higher than the best coffee extraction temperature of 85-94°C. Therefore the method of extraction at the airtight condition causes over extraction due to the excessively high temperature, which is one of the unavoidable defects of such method.

2) The extraction process depends on the pressure buildup when the water reaches its boiling point. Therefore, there is a lack of control of the amount and the duration of the pressure generated.

3) In consideration of the product cost and safety issues, the lower pot, which is heated to generate pressure from steam vapor, is not designed in a boiler style. Rather it is simply equipped with a safety valve for the airtight heating system. Thus, the pressure generated is low and is incapable of achieving the ideal condition of Espresso extraction at 8 - 12 Bar.

4) The currently available devices require heating by stove or electricity, therefore are limited in use as portable devices.

5) Safety concern is an issue when the lower pot heats up at airtight conditions.

6) Single extraction method and functionality for the same device.

**Manual handled coffee machine:** a piston is used to create the high pressure for making Espresso. The pressure pushes hot water upward to extract the coffee. This type of machine has the following limitations:

1) The machine utilizes a lever to move the piston, which action is facilitated by the base. Thus the device is bulky and impossible to work as a portable machine.

2) Single extraction method and single functionality for the same machine.

3) The machine has a relatively high sale price due to its size, materials and manufacture process.

**Portable Air-pressure ESP coffee machine:** The extraction pressure depends on the process of pumping air manually to a tank for storage, and the subsequent release of the pressurized air to create extraction pressure. This type of machine has the following limitations:

1) Due to its dependence of release of pressurized air to achieve extraction, its air-pressure is unstable. The machine produces a gradual decline of air-pressure to the point where the pressure is at 0 Bar. The machine's air tank is of limited size due to the design as a portable device, and therefore, the reduction of pressure during extraction is an unavoidable issue.

2) Due to its dependence on achieving pressurized air by hand operation and its limited size in air tank, the machine can not achieve the ideal extraction condition at 8 Par and extraction duration of 20 seconds.

3) The machine has a complicated manufacture process and yet single functionality.

4) The machine has a single input source for hot water.

### Summary of Invention

The invention is firstly to overcome the limitations in the current technology in espresso extraction, to provide an extraction device that is cost effective, with simple manufacture process, easy to use, independent of exterior power, portable and compatible with various heating resources. This invention offers multiple types of extraction and filtration methods with one device, thereby creating a portable, multifunctional coffee machine with applications in high-quality extraction and filtration process.

A portable, multifunctional coffee extracting device is described herein below. This device includes an outer container and an inner container. The inner container is placed inside the outer container, and can move up and down relatively. The outer container has a sealed bottom. The inner container has an extraction material holder and a mesh filter at a bottom thereof. There is a mechanical seal between the sidewalls of the outer and the inner containers.

The aforementioned extraction material holder has a water blockage plate or a porous partition plate at a bottom thereof.

When the inner container is placed inside the outer container of the portable multifunctional coffee extraction device, the space in between the sidewalls of the containers are connected with the inside space of the inner container through the extraction material holder.

The mechanical seal between the sidewalls of the inner and the outer containers can be realized by a common mechanical method, such as by using seal rings on the sidewalls.

The inner and outer containers can move relatively to each other. During such move, the space between the exterior sidewall of the inner container and the interior sidewall of the outer container becomes airtight due to the mechanical seal between the sidewalls.

The inner and outer containers can be of any shape commonly used for a container, such as a cylindrical, a rectangular, a polyhedron shape, etc. The cylindrical shape is a preferred choice.

Preferably, the water blockage plate or the porous partition plate is removable from the extraction material holder.

The aforementioned mesh filter contains a mesh. Any liquid inflow through the bottom of the inner container can be adjusted by the sectional area of the mesh or the water blockage plate.

The extraction material holder has a solid-liquid partition. The housing of the extraction material is formed by the solid-liquid partition, the inner sidewalls and the mesh filter.

A solid-liquid partition is used to separate liquid material from solid material, and can be of various filter parts, such as a mesh, a porous plate with holes or any other structure or material that can realize the function of the solid-liquid separation.

Preferably, there is a liquid guiding tube above the solid-liquid partition. One end of the liquid guiding tube is connected to the solid-liquid partition. The other end is the exit to the interior space of the inner container. This tube connects the extraction material holder to the inner container and guides extracting liquid to the interior space of the inner container. The design of the tube enables a sharp pressure change at the exit of the tube, which facilitates the formation of the crema in coffee extraction.

The liquid guiding tube can be designed either as a fixed part to the extraction material holder or as a removable part for the purpose of easy cleaning.

The extraction material holder is used to keep coffee powder or tea for beverages.

The mesh filter is removable by user allowing easy placement of the coffee powder or tea. Alternative one-time disposable package as a replacement for the regular extraction material holder can be used with coffee or tea bags in place of the extraction material holder.

When applying the device toward water purification purpose, the extraction material holder can be filled with the active carbon or other water filtration materials.

**The second aspect of the invention** is the application process of this portable multifunctional extraction device as described herein below.

This device can be applied to making various beverages, including espresso coffee, French press coffee, dripping coffee, tea and many other drinks from non-solvable solid.

This device can also used as a filtering device. By filling different types of filtering materials, such as active carbon or other materials, to the extraction material holder, various types of purified water may be obtained.

The mechanisms of the various applications of the multifunctional coffee extraction device are described herein below.

**For pressured extraction:**

Filled suitable amount of hot water at the suitable temperature in the outer container, put extraction material in the extraction material holder, slide the inner container into the outer container, hand presses down the inner container. Due to the mechanical sealing between the sidewalls of the two containers, the water in the outer container will be pushed upward to the extraction material holder and to the liquid guiding tube and to the inner container. The extraction process is completed. The extraction pressure is created by hand-pressing and is determined by a combination of factors, such as hand pressing force and speed, the inflow sectional area of the extraction material holder, the outflow sectional area for liquid exit and the grain sizes of the extraction material. Because the extraction pressure comes from the manual pressure, this can easily achieve the ideal espresso preparation condition at 8-9 Bar. The water temperature at 93°C and the extraction time at 20-25 seconds can be realized easily as well. This device can realize the preparation of very high quality espresso.

**For French Press:**

Put the extraction material in the outer container. Fill in suitable amount of hot water at the suitable temperature. Stir the mixture till evenly mixed and let stand 1-2 minutes. Remove the extraction material holder. Assemble the mesh filter directly to the bottom of the inner container. Slide the inner container into the outer container. Upon pressing down the inner container, the liquid in the outer container will flow into the inner container through the mesh filter. The extraction material will be kept in the outer container by the mesh filter. The extracted beverage liquid will flow into the inner container. The extraction process is completed.

**For dripping:**

Remove the extraction material holder from the inner container. Assemble the mesh filter to the bottom of inner container. Place the inner container on top of the outer container. Add the extraction material to the inner container. Pour suitable amount of hot water at the suitable temperature into the inner container. The water flows through the extraction material and the mesh filter, and drips into the outer container. The extraction process is completed.

Compared with the currently existing extraction devices in the market, the disclosed device provides superiorities as described herein below.

**A. Extraction Quality:**

In espresso: The effective pressure of the disclosed device can be at 8-9 Bar on coffee powder, which is commonly recognized pressure value worldwide. The end user can select the water temperature, and may follow the espresso extraction requirement at a professional level. The espresso created by the disclosed device can have same quality as one made by an electrical pump coffee machine. The disclosed device can create espresso extraction condition of 8-9 Bar effective pressure, around 93°C water and around 20 second extraction duration.

**In French Press:** The working mechanism of the disclosed device is not different from the existing French press device. The extraction quality of the disclosed device is the same as one from a traditional French press.

**In Pressured French Extraction:** The disclosed device can create about 1 Bar pressure in extraction process, thereby producing a better coffee with a stronger taste than one made by the traditional method.

**In Dripping:** The working mechanism of the disclosed device is the same as the traditional method. The extraction quality of the disclosed device is the same as one from a traditional dripping coffee (handmade coffee).

**B. Filtration Quality**

Filtration quality depends on the absorption capability of the active carbon particles. Different active carbon particles provide varying degrees of filtration quality. Generally, the disclosed device can achieve the same effect of the other water filtration devices equipped with the same types of active carbon particles. The disclosed device may provide better filtration quality when additional filtration materials are added.

**C. Quality of Use**

In the existing market, espresso has to be made with an electrical pump coffee machine. Espresso drinks can only be offered at places where an electrical pump coffee machine is installed. The disclosed device is portable, small size, easy-to-operate, and is capable of providing espresso as long as hot water or other resources making water heating are available. With the disclosed device, espresso is then as easily accessible as an instant coffee (the container may also be used as a drinking cup as well). With this device, espresso extraction can be realized in many places.

The disclosed device can create all necessary conditions of making the highest quality espresso. This is not possible with the currently existing non-electrical pump devices in the market.

The disclosed device is multifunctional, and completely surpasses the issue with the traditional coffee devices that serve only one extraction purpose per type of device. With the disclosed device, an end user may select many extraction processes according to the end user's own taste.

D. The disclosed device has a simple structure, low manufacturing cost, and is portable, a significant advantage over the present ones on the market. The disclosed device can be made of metal, plastics and other materials. The outer container can hold hot water at the appropriate temperature when it is made of the aforementioned various materials. An outer container made with heat durable materials can be used to heat up cold water to a desirable high temperature.

Compared with an electrical pump coffee machine, the disclosed device achieves quality espresso extraction and has many obvious advantages in cost, easy-of-use, compatible environments, portability and other aspects.

### Brief Description Of Figures

Figure 1 is a schematic diagram of the multi-functional beverage extraction **device A.**

Figure 2 is a schematic diagram of the inner container of the multi-functional beverage extraction **device A** in its moving position.

Figure 3 is a schematic diagram of the outer container of the multi-functional beverage extraction **device A.**

Figure 4 is a schematic diagram of the inner container of the multi-functional beverage extraction **device A**

Figure 5 is a schematic diagram of the multi-functional beverage extraction **device B.**

Figure 6 is a schematic diagram of the inner container of the multi-functional beverage extraction **device B** in its moving position.

Figure 7 is a schematic diagram of the outer container of the multi-functional beverage extraction **device B.**

Figure 8 is a schematic diagram of the inner container of the multi-functional beverage extraction **device B.**

Figure 9 is a schematic diagram of the screw-thread-based pressure creation tube of the multi-functional beverage extraction **device B.**

Figure 10 is a schematic diagram of the portable multi-functional beverage extraction **device C.**

Figure 11 is a schematic diagram of the inner container of the portable multi-functional beverage extraction **device C** in its moving position.

Figure 12 is a schematic diagram of the outer container of the multi-functional beverage extraction **device C.**

Figure 13 is a schematic diagram of the inner container of the multi-functional beverage extraction **device C.**

Figure 14 is a schematic diagram of the inner container of the portable multi-functional beverage extraction **device C** without the extraction material holder, but with the mesh filter.

Figure 15 is a schematic diagram of the extraction material holder of the portable multi-functional beverage extraction **device C.**

Figure 16 is a schematic diagram of the mesh filter of the portable multi-functional beverage extraction **device C.**

### Detailed Implementation

**Implementation Example One:**

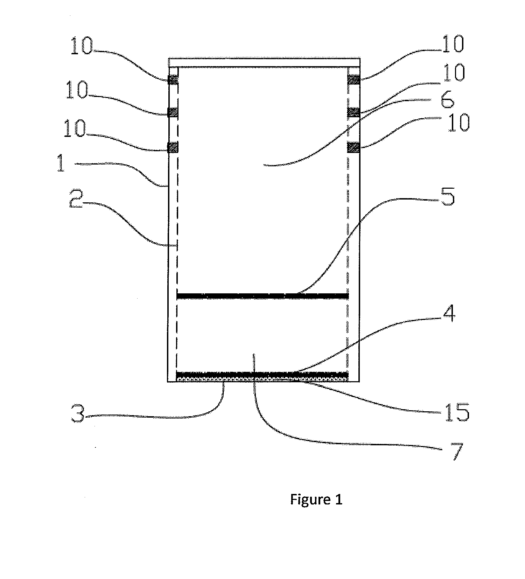

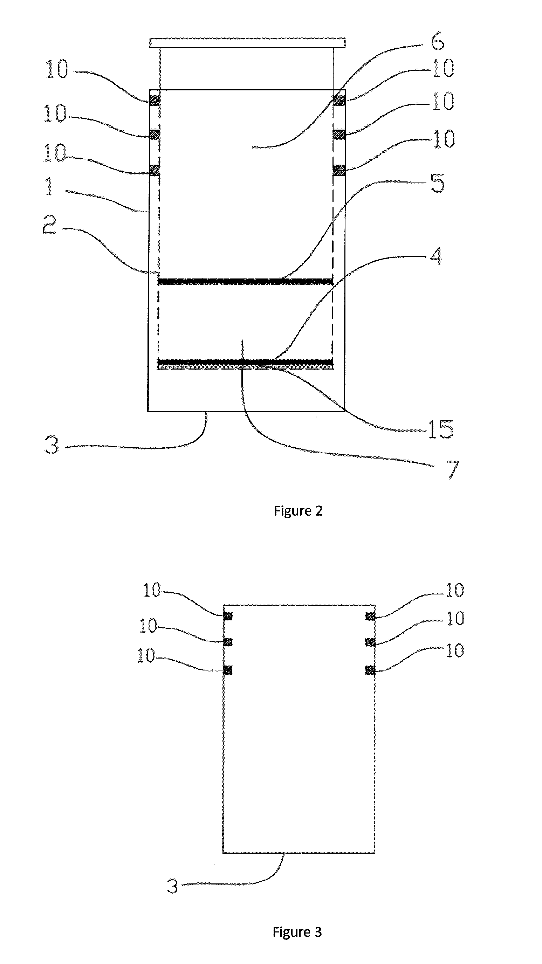

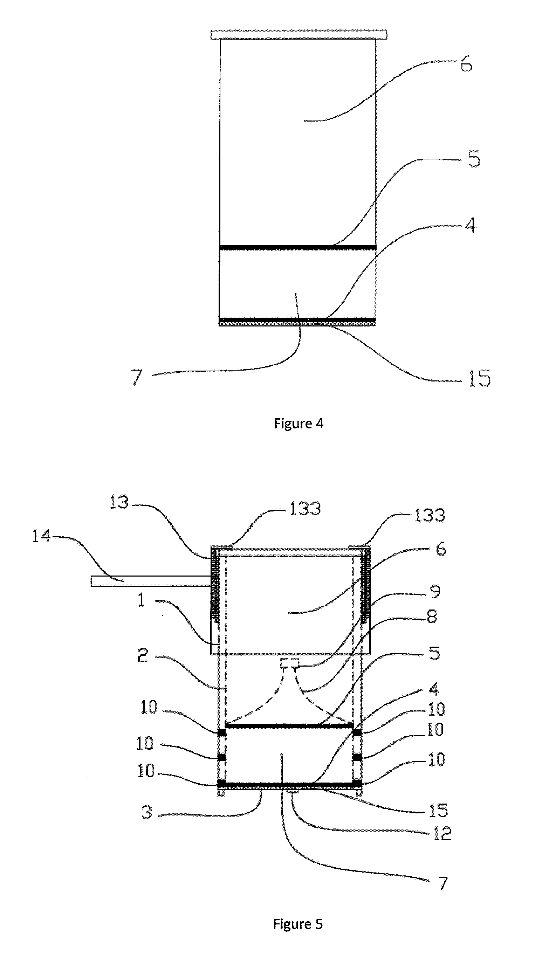

A multi-functional beverage extraction **device A** is shown in Figure 1 and Figure 2, with an outer container 1 (also shown in Figure 3) and an inner container 2 (also shown in Figure 4). The inner container 2 is placed inside the outer container 1. The inner container 2 can have relative movements within the outer container 1 and can be taken out separately. The outer container has a sealed bottom 3. The inner container has a mesh filter 4 in the bottom. There is a water blockage plate 15 below the mesh filter. Water blockage plate has holes for liquid to flow through. The space in the inner container is partitioned by a porous partition plate 5 into an upper inner space 6 and a lower inner space 7. The lower inner space 7 is removable. Seal ring 10 is attached at the inside sidewall of the outer container. The mesh filter 4 and the porous partition plate 5 are removable.

**Process of beverage extraction:**

**Espresso pressured extraction:**

Fill hot water at 85-90°C into the outer container 1, add coffee powder into the lower inner space 7, of the inner container, slide the inner container 2 into the outer container 1 and then press the inner container downwards. By the downward movement of the inner container, the hot water in the outer container 1 is pressurized in the airtight space between the two containers, flows upwards through the lower inner space 7 and then into the upper inner space 6 of the inner container. The extraction process is completed.

**French press extraction:**

Add coffee powder in the outer container 1, fill hot water at 85-90°C into the outer container 1, stir the mixture till evenly mixed and let stand 1-2 minutes. Remove the porous partition plate 5 and the water blockage plate 15 from the inner container 2. Slide the inner container into the outer container and press downwards. The coffee powder will be kept in the outer container by the mesh filter. The extracted beverage liquid will flow into the inner container. The extraction process is completed.

**Pressured French extraction:**

Add the coffee powder into the outer container, fill in hot water at 85-90°C, stir the mixture till evenly mixed and let stand 1-2 minutes. Remove the porous partition plate 5 and slide the inner container into the outer container. Because the opening area of the water blockage plate 15 is smaller than the opening of the outer container, pressure builds up during the pressing of the inner container downward into the outer container. The liquid enters the inner container (at a pressure of about 1 Bar) during the extraction process. This pressured French press extraction method can create a stronger taste than one from the traditional French press extraction.

**Dripping extraction:**

Remove the water blockage plate 15 and the porous partition plate 5. Add coffee powder into the inner container 2. Place the inner container securely above the outer container. Fill in suitable amount of hot water into the inner container. The water flows through the powder, passes the mesh filter and drips into the outer container. The extraction process is completed.

**Tea extraction**

Depending on the individual's preference of taste, tea extraction can be made by any one of the aforementioned methods. Due to the short extraction duration, some harmful elements from tea leafs are seldom extracted into the drinks. Thus, all of the aforementioned methods are better than the traditional steeping extraction method.

**Implementation Example Two:**

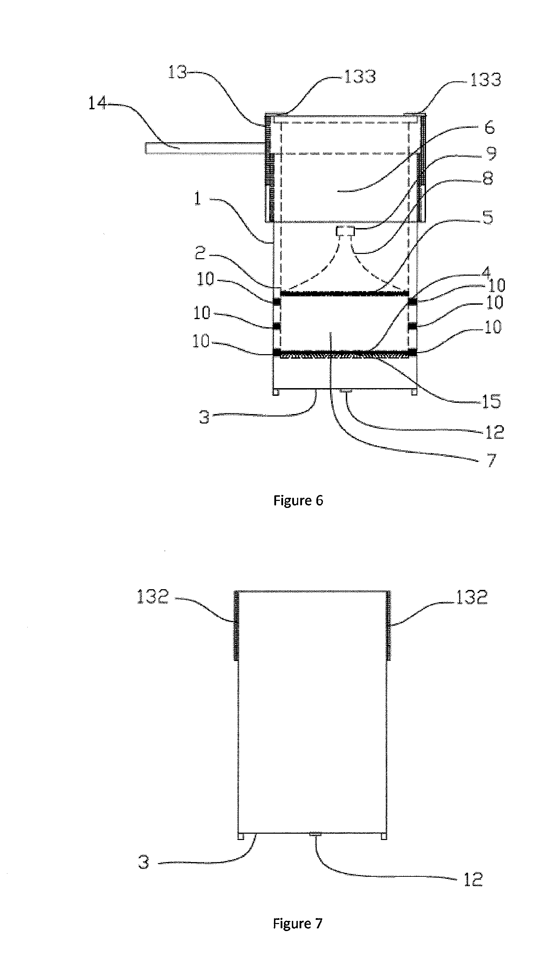

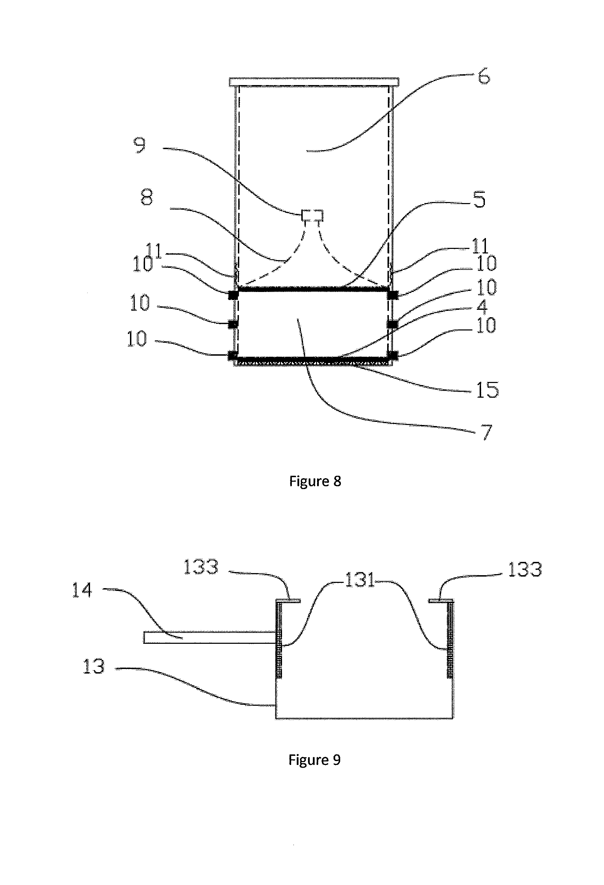

A multi-functional beverage extraction device B is shown in Figure 5 and Figure 6, with an outer container 1 (also shown in Figure 7), and an inner container 2 (also shown in Figure 8). The inner container 2 is placed inside the outer container 1. The inner container 2 can have relative movements within the outer container 1 and can be taken out separately. The outer container has a sealed bottom 3. The inner container has a mesh filter 4. There is a water blockage plate 15 below the mesh filter. The inner container is separated by a porous partition plate 5 into an upper inner space 6 and a lower inner space 7. Seal ring 10 is attached at the outside sidewall of the inner container. The upper inner space 6 and the lower inner space 7 are linked through screw track 11. A pressure balance device 12 is at the bottom of the outer container 1. This pressure balance device has an air hole and a spring loaded screw seal cap. The outer container is totally sealed when the screw seal cap is tightened. While the screw seal cap is loosened, air can flow into the space between the inner container and the outer container. A screw-thread-based pressure creation tube is on the outer container and also linked to the inner container, as shown in Figure 9. The screw-thread-based pressure creation tube has a screw track, a tube structure 13 with upper and lower openings and a handle 14. The handle is at the outside of the tube structure. Screw track 132 and 131 are located on the exterior sidewall of the outer container and the interior sidewall of the tube structure, respectively. The interlinked portions of sidewall of the outer container and the tube structure have matching cylindrical shape and screw tracks. A flange 133 at the upper end of the tube structure covers partially or totally the upper edge of the inner container. A removable liquid guiding tube 8 is placed above the porous partition plate 5. The bottom end of the liquid guiding tube is matched and linked to the contour of the porous partition plate 5, and the upper end is for liquid exit. The pressure valve 9 is located at the exit of this tube.

**Various Extraction process:**

**Espresso pressured extraction.**

Fill suitable hot water at 85-90°C into the outer container 1. Add coffee powder in the lower inner space 7, slide the inner container into the outer container, and press down into the outer container. By the downward movement of the inner container, the hot water in the outer container 1 is pressurized in the airtight space between the two containers, flows upwards through the lower inner space 7 and then into the upper inner space 6 of the inner container, completing the extraction process.

**French press:**

Add the coffee powder in the outer container 1, fill hot water at 85-90°C into the outer container 1, stir the mixture till evenly mixed and let stand 1∼2 minutes. Remove the porous partition plate 5, the liquid guiding tube 8, the pressure valve 9 and the water blockage plate 15 from the inner container 2. Slide the inner container into the outer container and press downwards. The coffee powder will be kept in the outer container by the mesh filter. The extracted beverage will flow into the inner container. The extraction process is completed.

**Pressured French press:**

Add the coffee powder into the outer container 1, fill in hot water at 85-90°C, stir the mixture till evenly mixed and let stand 1- 2 minutes. Remove the porous partition plate 5 and the liquid guiding tube 8 from the inner container. Slide the inner container into the outer container. Because the opening area of the water blockage plate 15 is smaller than the opening of the outer container, pressure builds up during the pressing of the inner container downward into the outer container. The liquid enters the inner container (at a pressure of about 1 Bar) during the extraction process. This pressured French press extraction method can create a beverage with a stronger taste than one made by the traditional French press extraction.

**Dripping**

Remove the porous partition plate 5, liquid guiding tube 8, pressure valve 9 and water blockage plate 15 from the inner container 2. Then add the coffee powder into the inner container 2. Place the inner container securely above the outer container. Fill in suitable amount of hot water into the inner container. The water flows through the powder, passes the mesh filter and drips into the outer container, completing the extraction process.

**Tea extraction**

Depending on the individual's preference of taste, tea extraction can be made by any one of the aforementioned methods. Due to the short extraction duration, some harmful elements from the tea are seldom extracted into the drinks. Thus, all of the aforementioned methods are better than the traditional steeping extraction method.

**Implementation Example Three:**

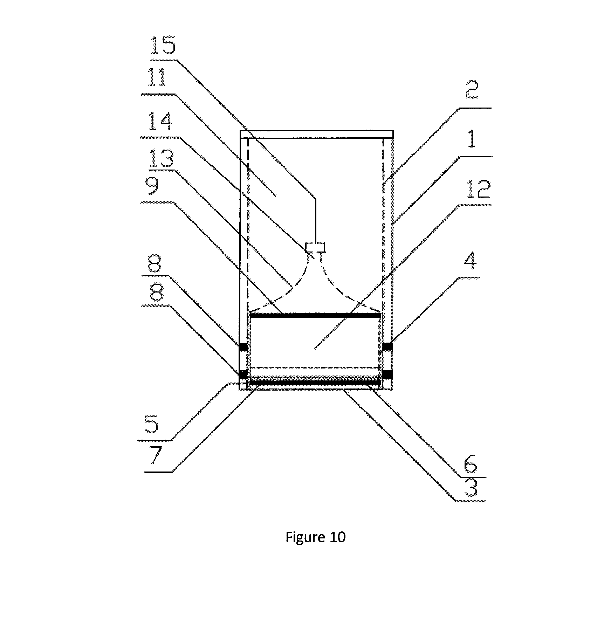

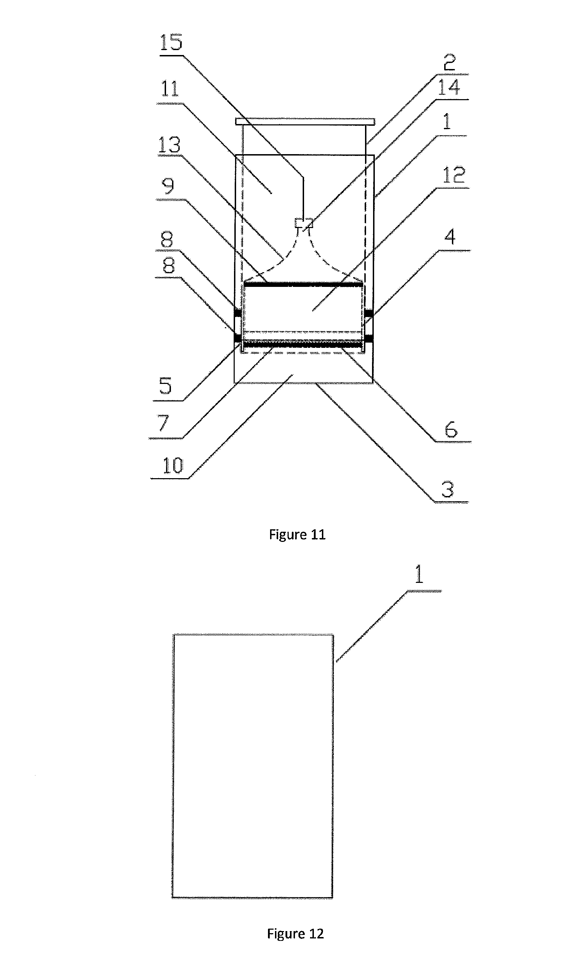

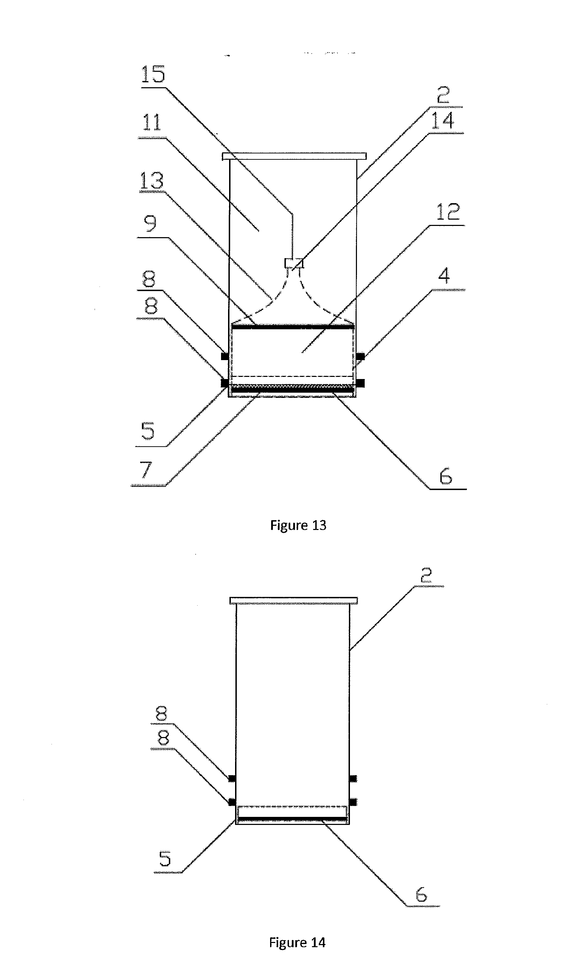

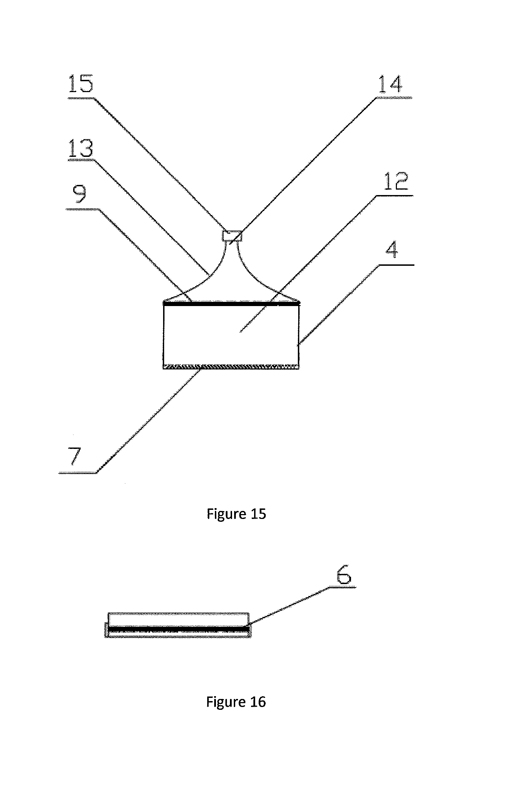

A multifunctional beverage extraction **device C** is shown in Figure 10 and Figure 11, with an outer container 1 (also shown in Figure 12), and an inner container 2 (also shown in Figure 13). The inner container 2 is placed inside the outer container 1. The inner container 2 can have relative movements within the outer container 1 and can be taken out separately. The outer container has a sealed bottom 3. The inner container has an extraction material holder 4. The extraction material holder includes an inner chamber 12 for holding the extraction material, a porous partition plate 9 and a liquid guiding tube 13. There is a water blockage plate 7 or a porous partition plate at the bottom end of this extraction material holder. A mesh filter 5 is at the bottom end of inner container. The water blockage plate 7 or a porous partition plate can be omitted, and in that case the mesh filter 5 becomes the bottom of the extraction material holder and contacts the inner container. When the water blockage plate is added to the extraction material holder, it is laid above the mesh filter. The mesh filter contains a mesh 6, as shown in Figure 16. Mechanical seal rings 8 are located between the interior sidewall of the outer container and exterior sidewall of the inner container. The seal rings can be either on the exterior sidewall of the inner container or on the interior sidewall of the outer container. The extraction material holder, mesh filter and water blockage plate are removable parts. The extraction material holder with only mesh filter is shown in Figure 14. A detailed view of the extraction material holder is shown in Figure 15. It has a porous partition plate 9 on the top. It has an inner chamber 12, which is enclosed by the porous partition plate 9, the interior sidewall of the extraction material holder 4, the water blockage plate 7. A liquid guiding tube 13 is above the porous partition plate 9. This liquid guiding tube has one bottom end connected to the inner chamber through the porous partition plate 9, and has a liquid exit 14 on the upper end connected to the inner container. The extracted liquid then flows through the pressure valve 15 into the interior space 11 of the inner container. Liquid guiding tube and the extraction material holder can be an integrated sub-assembly or part.

After coupling the inner and the outer container, the volume 10 of the outer container are connected with the interior space 11 through the extraction material holder 4.

This invention can also be used for water filtering, in the following two ways. One way is to add active carbon or other filtration material into the extraction material holder. Another way is to add active carbon or other filtration material in the inner container, place the inner container above the outer container and pour any dirty water into the inner container.

**Extraction process:**

**Espresso pressured extraction:**

Fill hot water at suitable temperature into the outer container 1. Add the coffee powder into the extraction material holder. Slide the inner container 2 into the outer container and press down. The hot water in the outer container is pushed upward by the pressure built in the airtight space between the two containers, flows though the extraction material holder and the liquid guiding tube 13, enters into the interior space 11, completing the extraction process.

**French press:**

Add coffee powder into the outer container 1. Fill in hot water at suitable temperature. Stir the mixture till evenly mixed and let stand 1-2 minutes. Remove the extraction material holder 4 and the water blockage plate 7. Cap the mesh filter 5 on the bottom of the inner container 2. Slide the inner container 2 into the outer container 1 and press down. The coffee powder will be kept in the outer container by the mesh filter. The extracted beverage will flow into the inner container. The extraction process is completed.

**Pressured French press:**

Add coffee powder into the outer container 1. Fill in hot water at suitable temperature. Stirring the mixture till evenly mixed and let stand 1-2 minutes. Remove the extraction material holder 4 and the water blockage plate 7. Cap the mesh filter 5 on the bottom of the inner container 2. Slide the inner container 2 into the outer container 1 and press down. Because the opening area of the water blockage plate is smaller than the opening of the outer container, pressure builds up during the pressing of the inner container downward into the outer container. The liquid enters the inner container (at a pressure of about 1 Bar) during the extraction process. This pressured French press extraction method can create a stronger and more flavorful taste than the traditional French press extraction.

**Dripping**

Remove the extraction material holder 4, the water blockage plate 7 from the inner container 2. Cap the mesh filter 5 on the bottom of the inner container. Add the coffee powder into the inner container 2. Place the inner container 2 above the outer container 1. Fill in suitable amount of hot water at the suitable temperature into the inner container 1. The water flows through the extraction material, passes the mesh filter and drips into the outer container. The extraction process is completed.

**Tea extraction**

Depending on the individual's preference of taste, tea extraction can be made by any one of the aforementioned methods. Due to the short extraction duration, some harmful elements from the tea are seldom extracted into the drinks. Thus, all of the aforementioned methods are better than the traditional steeping extraction method.

## Claims

1. A portable multifunctional coffee extraction device comprising an outer container, an inner container, wherein the inner container is slidably placed inside the outer container; the outer container has a sealed bottom; the inner container has an extraction material holder at a bottom of the inner container; the inner container also has a mesh filter, or a water blockage plate, or a porous partition plate at the bottom of the inner container; and the portable multifunctional coffee extraction device further comprises a seal mechanism between an interior sidewall of the outer container and an exterior sidewall of the inner container.

2. The device, as recited in claim 1, wherein the extraction material holder has a water blockage plate or a porous partition plate at a bottom of the extraction material holder.

3. The device, as recited in claim 1, wherein a space between the inner and outer containers is in fluid communication with an interior of the inner container through the extraction material holder.

4. The device, as recited in claim 1, wherein the seal mechanism comprises one or more sealing rings.

5. The device, as recited in claim 1, wherein the extraction material holder is removable.

6. The device, as recited in claim 1, wherein the mesh filter is removable.

7. The device, as recited in claim 1, wherein the water blockage plate is removable or the porous partition plate is removable.

8. The device, as recited in any one of claims 1-6, wherein the extraction material holder has a solid-liquid separation part therein.

9. The device, as recited in claim 7, wherein the solid-liquid separation part is a porous partition plate or a mesh filter.

10. The device, as recited in claim 7, further comprising a liquid guiding tube, one end of which is connected to the solid-liquid separation part, and another end of which is an outlet open to an interior of the inner container; wherein the extraction material holder is in fluid communication with the interior of the inner container through the liquid guiding tube.

11. The device, as recited in claim 9, wherein the liquid guiding tube is integrated with the extraction material holder or is removable from the extraction material holder.

12. The device, as recited in any one of claims 1-11, is operable to purify water.

13. A method of using the device of claim 1, is operable to extract espresso, French press coffee, dripping coffee or tea.

14. A method of using the device of claim 13, comprising: filling the outer container with water of predetermined volume and predetermined temperature; placing an extraction material in the extraction material holder; sliding the inner container into the outer container; pressing the inner container against the outer container such that the water in the outer container flows through the extraction material holder directly into an interior of the inner container or the water in the outer container flows through the extraction material holder and the liquid guiding tube into the interior of the inner container.
